# EUROPÄISCHE PATENTSCHRIFT

(11) **EP 2 151 570 B1**
(45) Veröffentlichungstag und Bekanntmachung des Hinweises auf die Patenterteilung: **29.06.2011**
(21) Anmeldenummer: 09008600.0
(22) Anmeldetag: 01.07.2009
(51) Int. Cl.: F02M 25/07, F01N 3/08, F01N 3/20

(54) **Abgasrückführsystem für eine Verbrennungskraftmaschine**
Exhaust gas recirculation system for a combustion engine
Dispositif de recirculation des gaz d'échappement pour un moteur à combustion interne

(30) Priorität: 07.08.2008 DE 102008036896
(43) Veröffentlichungstag der Anmeldung: 10.02.2010
(73) Patentinhaber: Bayerische Motoren Werke, 80809 München (DE)
(72) Erfinder: Eibl, Rüdiger, 86932 Pürgen (DE); Ullmann, Stephan, 81675 München (DE); Betzelt-Heck, Ute, 85757 Karlsfeld (DE); Rückert, Joachim, 81927 München (DE); Calinski, Daniela, 80809 München (DE); Kum, Abidin, 81547 München (DE); Schreck, Claus-Peter, 85521 Ottobrunn (DE); Ramatschi, Stephan, 85604 Pöring (DE)

(56) Entgegenhaltungen:
- EP-A1- 1 900 926
- WO-A1-2008/113471
- DE-A1-102006 040 876
- DE-A1-102006 059 299
- US-B1- 6 973 786

## Beschreibung

Die Erfindung betrifft ein Abgasrückführungssystem für eine Verbrennungskraftmaschine sowie eine Verbrennungskraftmaschine mit Aufladungssystem und Abgasrückführungssystem.

Abgasrückführungssysteme sind allgemein bekannt, um durch Zufuhr eines Teils der Abgase der Verbrennungskraftmaschine zur Ansaugluft die Zusammensetzung der Abgase der Verbrennungskraftmaschine zu verändern, insbesondere um die Bildung von Stickoxiden zu verringern. Allgemein bekannt sind auch NOₓ-Speicherkatalysatoren, welche die im Abgas enthaltenen Stickoxide zwischenspeichern und diese in Regenerationszyklen zu N₂ umsetzen.

In der EP 1 900 926 A1 ist ein Abgasrückführungssystem für eine Verbrennungskraftmaschine offenbart, bei welchem eine Abgasrückführungsleitung stromauf eines Partikelfilters vom Abgasstrang abzweigt. Die Abgasrückführungsleitung ist zur Steuerung der rückgeführten Abgasmenge mit einem AGR-Ventil ausgestattet und mündet stromab eines Drosselventils in den Ansaugtrakt der Verbrennungskraftmaschine.

Die DE 10 2006 059 299 A1 zeigt ein Abgasrückführungssystem mit den Merkmalen gemäß dem Oberbegriff des Patentanspruchs 1. Der Abgasstrang einer Verbrennungskraftmaschine weist dabei eine durch eine Abgasbehandlungsvorrichtung führende Leitung und eine die Abgasbehandlungsvorrichtung umgehende Bypassleitung auf, wobei in der Bypassleitung zwei Ventile hintereinander angeordnet sind, durch deren gleichzeltiges Schließen die Bypassleitung absperrbar ist. Zwischen den beiden Ventilen zweigt an der tiefsten Stelle der Bypassleitung eine Rückführleitung ab, welche an eine Unterdruckquelle zum Absaugen von an der tiefsten Stelle befindlichem Abgaskondensat anschließbar ist.

Die US 6,973,786 B1 offenbart ein Abgasrückführungssystem für einen Verbrennungsmotor, mit einer ersten Rückführschleife, die Abgas von stromaufwärts einer Turbine eines Turboladers nach stromabwärts eines Kompressors des Turboladers rückführt, und einer zweiten Rückführschleife, die Abgas von stromabwärts der Turbine nach stromaufwärts des Kompressors rückführt.

Aus der DE 10 2006 040 876 A1 ist eine Verbrennungskraftmaschine mit Abgasrückführung bekannt, bei der ein NOₓ-Speicherkatalysator und ein Abgasrückführungssystem vorhanden sind. Es ist ein Bypass für den NOₓ-Speicher katalysator vorgesehen, mit dem zumindest ein Teil des Abgasstroms um den Speicherkatalysator herumgeleitet werden kann. Dem Bypass sind zwei Ventile zugeordnet, von denen eines stromaufwärts des Speicherkatalysators und das andere stromabwärts des Speicherkatalysators angeordnet ist. Die Abgasrückführungsleitung ist zwischen den beiden Ventilen an den Bypass angeschlossen. Wenn die beiden Ventile so geschaltet sind, dass sie den Bypass absperren, kann über die Abgasrückführungsleitung das Abgas abgesaugt und dem Ansaugtrakt der Verbrennungskraftmaschine zugeführt werden, das aufgrund von Undichtigkeiten der Ventile in den Bypass gelangt. Auf diese Weise ist gewährleistet, dass kein Abgas den NOₓ-Speicherkatalysator umgehen und unmittelbar in die Umgebung gelangen kann. Das in dieser Druckschrift beschriebene Abgasrückführungssystem kann jedoch aus verschiedenen Gründen nicht bei einer aufgeladenen Verbrennungskraftmaschine verwendet werden.

Die Aufgabe der Erfindung besteht darin, ein Abgasrückführungssystem für eine Verbrennungskraftmaschine zu schaffen, das auch bei einer aufgeladenen Verbrennungskraftmaschine eingesetzt werden kann.

Zu diesem Zweck ist erfindungsgemäß ein Abgasrückführungssystem für eine Verbrennungskraftmaschine vorgesehen, mit einem Emissionskontrollsystem, einem Emissionkontrollsystem-Bypass, einer Abgasrückführungsleitung, die einen ersten Absaugstrang aufweist, der vom Bypass abzweigt, und einen Rückführstrang, der stromaufwärts eines Aufladungssystems in den Ansaugtrakt der Verbrennungskraftmaschine mündet. Dies ermöglicht, das zurückzuführende Abgas bei vielen Betriebszuständen optimal in den Ansaugtrakt zurückzuführen.

Gemäß der Erfindung ist ein weiterer Rückführstrang vorgesehen, der stromaufwärts einer Drosselklappe der Verbrennungskraftmaschine in deren Ansaugtrakt mündet. Die Erfindung beruht auf dem Grundgedanken, nicht lediglich einen einzigen Rückführstrang für das Abgas in den Ansaugtrakt der Verbrennungskraftmaschine zu verwenden, sondern einen zweiten. Auf diese Weise kann je nach Betriebszustand der Verbrennungskraftmaschine der erste Rückführstrang oder der zweite Rückfuhrstrang verwendet werden, oder es können beide Rückführstränge verwendet werden.

Gemäß der Erfindung ist vorgesehen, dass die Abgasrückführungsleitung einen zweiten Absaugstrang aufweist, der vom Abgasstrang stromaufwärts des Emissionskontrollsystems abzweigt. Über den zweiten Absaugstrang kann Abgas unabhängig vom Emissionskontrollsystem-Bypass entnommen werden.

Gemäß einer bevorzugten Ausführungsform ist vorgesehen, dass Im zweiten Absaugstrang ein Abgaskühler angeordnet ist Dies ermöglicht, einen wesentlichen Teil des zurückgeführten Abgases zu kühlen, wodurch die von der Verbrennungskraftmaschine erzeugten Stickoxide weiter verringert werden.

Vorzugsweise ist im zweiten Absaugstrang ein Abgaskühler-Bypass angeordnet, dem vorzugsweise ein Steuerventil zugeordnet ist. Dies ermöglicht, die Temperatur des zurückgeführten Abgases dadurch zu steuern, dass ein Teil durch den Abgaskühler und ein Teil durch den Abgaskühler-Bypass strömt.

Zur Steuerung des Abgasvolumens das über den ersten und den zweiten Absaugstrang zurückgeführt wird, sind im ersten und im zweiten Absaugstrang jeweils ein Ventil angeordnet, insbesondere ein Regelventil.

Vorzugsweise ist vorgesehen, dass dem Emissionskontrollsystem-Bypass zwei Absperrventile zugeordnet sind und dass der erste Absaugstrang zwischen den beiden Ventilen abzweigt. Dies ermöglicht, einen Abgas-Leckstrom zwischen den beiden Absperrventilen abzusaugen und dem Saugtrakt der Verbrennungskraftmaschine wieder zuzuführen. Auf diese Weise ist gewährleistet, dass nur Abgas in die Umgebung gelangt, welches das Emissionskontrollsystem durchströmt hat; eine Umgehung durch den Bypass aufgrund von eventuellen Undichtigkeiten der Absperrventile ist verhindert.

Vorzugsweise ist im ersten und im zweiten Rückführstrang jeweils ein Sperrventil angeordnet. Auf diese Weise kann gesteuert werden, ob das rückgeführte Abgas stromaufwärts oder stromabwärts Aufladungssystems in den Ansaugtrakt der Verbrennungskraftmaschine geleitet wird.

Gemäß einer bevorzugten Ausführungsform der Erfindung ist vorgesehen, dass stromaufwärts der Stelle, an welcher der zweite Rückführstrang in den Ansaugtrakt mündet, eine Hilfsdrosselklappe angeordnet ist. Mit der Hilfsdrosselklappe kann im Ansaugtrakt stromaufwärts des Aufladungssystems der nötige Unterdruck erzeugt werden, mittels dem das zurückgeführte Abgas in den Ansaugtrakt gesaugt wird.

Als Aufladungssystem kann insbesondere ein Abgasturbolader oder auch ein Kompressor verwendet werden.

Als Emissionskontrollsystem kann insbesondere ein Speicherkatalysator verwendet werden oder auch ein Partikelfilter oder ein SCR-Katalysator.

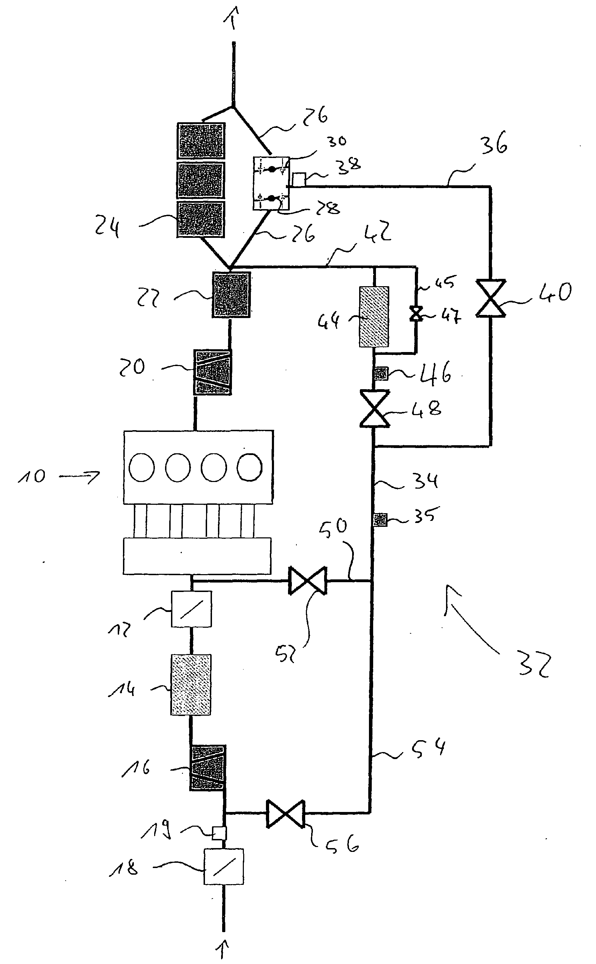

Die Erfindung wird nachfolgend anhand einer Ausführungsform beschrieben, die in der beigefügten einzigen Zeichnung dargestellt ist. Die Zeichnung zeigt ein Blockschaltbild einer Verbrennungskraftmaschine mit Abgasrückführungssystem nach der Erfindung.

In der Figur ist eine Verbrennungskraftmaschine 10 gezeigt, die in ihrem Ansaugtrakt eine Drosselklappe 12, einen Ladeluftkühler 14, einen Verdichter 16 eines Abgasturboladers und eine Hilfsdrosselklappe 18 aufweist. Stromabwärts der Hilfsdrosselklappe 18 ist ein Drucksensor 19 angeordnet. Die Hilfsdrosselklappe 18 kann auch vor dem Ansauggeräuschdämpfer angeordnet sein. Anstelle einer Klappe kann auch ein anderes Drosselelement verwendet werden, beispielsweise ein Venturirohr oder ein Schieber.

Auf der Abgasseite der Verbrennungskraftmaschine 10 sind eine Turbine 20 des Abgasturboladers, die mit dem Verdichter 16 gekoppelt ist, ein Vorkatalysator 22 und als Emissionskontrollsystem ein NOₓ-Speicherkatalysator 24 angeordnet. Dem NOₓ-Speicherkatalysator 24 ist ein Speicherkatalysator-Bypass 26 zugeordnet, der stromaufwärts des Speicherkatalysators 24 von der Abgasleitung abzweigt und stromabwärts wieder in dieser mündet. Dem Speicherkatalysator-Bypass 26 sind zwei Absperrventile 28, 30 zugeordnet, die von einem (nicht dargestellten) Stellmotor angesteuert werden. In Abhängigkeit von der Stellung der Absperrventile 28, 30 kann ein Teil des Abgases den NOₓ-Speicherkatalysator 24 umgehen.

Es ist ein Abgasrückführungssystem 32 vorgesehen, das eine Abgasrückführungsleitung 34 aufweist, an der ein Abgasmassenmesser 35 angeordnet ist. Dies Abgasrückführungsleitung 34 ist auf der Abgasseite der Verbrennungskraftmaschine 10 doppelsträngig ausgeführt. Es ist ein erster Absaugstrang 36 vorgesehen, der zwischen den beiden Absperrventilen 28, 30 vom Speicherkatalysator-Bypass 26 abzweigt. Der Absaugstrang 36 weist ein Regelventil 40 auf sowie in der Nähe der Absperrventile 28, 30 einen Drucksensor 38. Weiterhin ist ein zweiter Absaugstrang 42 vorgesehen, der zwischen dem Vorkatalysator 22 und dem NOₓ-Speicherkatalysator 24 an die Abgasleitung angeschlossen ist und einen Abgaskühler 44 mit Abgaskühler-Bypass 45, einen Temperatursensor 46 und ein Regelventil 48 aufweist. Der zweite Absaugstrang kann auch an einer anderen Stelle an die Abgasleitung angeschlossen sein, beispielsweise vor der Turbine 20, zwischen der Turbine 20 und dem Katalysator 22 oder weiter stromabwärts.

Der dem Saugtrakt der Verbrennungskraftmaschine 10 zugeordnete Teil des Abgasrückführungssystems ist ebenfalls zweisträngig ausgebildet. Die Abgasrückführungsleitung 34 verzweigt sich in einen ersten Rückführstrang 50, der stromabwärts der Drosselklappe 12 im Ansaugtrakt mündet und mit einem Sperrventil 52 versehen ist, und einen zweiten Rückführstrang 54, der stromabwärts der Hilfsdrosselklappe 18, jedoch stromaufwärts des Verdichters 16 im Ansaugtrakt mündet und mit einem Sperrventil 56 versehen ist. Der erste Rückführstrang 50 kann auch an einer anderen Stelle im Ansaugtrakt münden. Wichtig ist nur, dass die Einleitung zwischen dem Verdichter 16 und der Verbrennungskraftmaschine 10 erfolgt.

In einem ersten Betriebszustand sind die beiden Regelventile 40, 48 und die beiden Sperrventile 52, 56 geschlossen. Ebenso sind die beiden Absperrventile 28, 30 geschlossen, so dass der Speicherkatalysator-Bypass 26 ebenfalls geschlossen ist. Die Hilfsdrosselklappe 18 wird nicht angesteuert und befindet sich daher in einem vollständig geöffneten Zustand.

Dieser Betriebszustand ist besonders sinnvoll im homogenen Warmlauf zum Aufheizen des NOₓ-Speicherkatalysators 24. Ferner ist dieser Betriebszustand denkbar zur Regeneration/Desulfatisierung des NOₓ-Speicherkatalysators, da in diesem Betriebszustand die maximalen Temperaturen im NOₓ-Speicherkatalysator auftreten. Da keine Abgasrückführung über den ersten Absaugstrang 36 stattfindet, muss in diesem Betriebszustand allerdings ein geringer Leckagestrom durch die Absperrventile 28, 30 toleriert werden.

In einem zweiten Betriebszustand sind weiterhin die Regelventile 40, 48 und die Sperrventile 52, 56 geschlossen; es findet also keine Abgasrückführung statt. Ferner ist die Hilfsdrosselklappe 18 nicht angesteuert. Allerdings sind die beiden Absperrventile 28, 30 geöffnet, so dass ein Teil des Abgasstroms durch den Speicherkatalysator-Bypass 26 strömt.

Dieser Betriebszustand ist insbesondere möglich, wenn das zugeführte Gemisch einen Wert von λ = 1 hat. Der Betriebszustand dient bei voller Last zur Senkung des Abgasgegendrucks und ermöglicht die maximale Leistung der Verbrennungskraftmaschine 10. Gleichzeitig wird der NOₓ-Speicherkatalysator 24 vor zu hohen Temperaturen geschützt.

Der erste und der zweite Betriebszustand können unabhängig davon gewählt werden, ob der Verdichter des Abgasturboladers einen Ladedruck bereitstellt oder nicht.

In einem dritten Betriebszustand, der bei Volllast gewählt werden kann, wird Abgas bei geöffnetem Speicherkatalysator-Bypass 26 zurückgeführt. In diesem Betriebszustand ist das erste Regelventil 40 geschlossen, während das zweite Regelventil 48 geöffnet ist. Das erste Sperrventil 52 ist geschlossen, während das zweite Sperrventil 56 geöffnet ist. Die Hilfsdrosselklappe 18 wird nicht angesteuert und befindet sich in ihrer vollständig geöffneten Position. In diesem Zustand, bei dem wieder ein Gemisch mit λ ≤ 1 zugeführt wird, wird das über den zweiten Absaugstrang 42 zurückgeführte Abgas durch den Abgaskühler 44 gekühlt. Dieser Betriebszustand vermindert die Notwendigkeit, aus Bauteilschutzgründen das Gemisch anzufetten, und verringert außerdem den Verbrauch der Verbrennungskraftmaschine.

Ein vierter Betriebszustand ist besonders geeignet für den Magerbetrieb der Verbrennungskraftmaschine 10, bei dem eine Abgasrückführung notwendig ist und außerdem zuverlässig verhindert werden soll, dass Abgas unter Umgehung des NOₓ-Speicherkatalysators 24 das Abgassystem verlässt. Im vierten Betriebszustand ist das erste Regelventil 40 geöffnet, und das zweite Regelventil 48 wird geregelt betrieben. Das erste Sperrventil 52 ist im vierten Betriebszustand geschlossen, während das zweite Sperrventil 56 geöffnet ist. Die beiden Absperrventile 28, 30 sind geschlossen, so dass das gesamte Abgas durch den NOₓ-Speicherkatalysator 24 strömen muss. Die Hilfsdrosselklappe 18 wird so angesteuert, dass der nötige Unterdruck (in der Größenordnung von 20 bis 30 mbar) zum Ansaugen des Abgases aus dem zweiten Rückführstrang 54 gewährleistet ist. Das geöffnete Regelventil 40 gewährleistet, dass zwischen den beiden Absperrventilen 28, 30 der Leckagestrom an Abgas abgesaugt. wird, der durch die Absperrventile 28, 30 in unerwünschter Weise hindurchtritt. Auf diese Weise kann kein Abgas die Abgasanlage verlassen, ohne den NOₓ-Speicherkatalysator 24 zu durchqueren. Das Regelventil 48 wird so geregelt, dass die insgesamt notwendige Menge an rückgeführtem Abgas erreicht wird, also der Anteil über den zweiten Absaugstrang 42 geliefert wird, der nicht zwischen den Absperrventilen 28, 30 abgesaugt wird.

Ein fünfter Betriebszustand besteht darin, möglichst wenig Abgas zurückzuführen, und zwar gerade so viel, dass ein Umgehen des NOₓ-Speicherkatalysators 24 durch den Speicherkatalysator-Bypass 26 verhindert ist. In diesem Betriebszustand sind die Absperrventile 28, 30, das zweite Regelventil 48 und das erste Sperrventil 52 geschlossen. Das zweite Sperrventil 56 ist geöffnet, und die Hilfsdrosselklappe 18 wird je nach Bedarf angesteuert. Das Regelventil 40 wird so geregelt, dass möglichst wenig Abgas zurückgeführt wird, nämlich genau der Leckagestrom durch die Absperrventile 28, 30. Dieser Betriebszustand ist besonders geeignet für die Regeneration des NOₓ-Speicherkatalysators 24.

Sowohl der vierte als auch der fünfte Betriebszustand können unabhängig davon verwendet werden, ob sich die Verbrennungskraftmaschine im Saugbetrieb befindet oder mit Aufladung betrieben wird.

Ein sechster Betriebszustand ist in gleicher Weise wie der fünfte Betriebszustand bei einer Regeneration des NOₓ-Speicherkatalysators vorgesehen, jedoch insbesondere für den Saugbetrieb der Verbrennungskraftmaschine 10. Im sechsten Betriebszustand sind das zweite Regelventil 48, das zweite Sperrventil 56 und die beiden Absperrventile 28, 30 geschlossen. Eine Ansteuerung der Hilfsdrosselklappe 18 ist nicht notwendig, da das erste Sperrventil 52 geöffnet ist, so dass das Abgas stromabwärts der Drosselklappe 12 zurückgeführt wird. Das erste Regelventil 40 wird in gleicher Weise wie beim fünften Betriebszustand so geregelt, dass eine minimale Menge an Abgas rückgeführt wird, nämlich der Leckagestrom durch die beiden Absperrventile 28, 30.

Ein siebter Betriebszustand ist geeignet während des Warmlaufs der Verbrennungskraftmaschine im nicht aufgeladenen Betrieb. Hier ist aus Verbrauchsgründen ein Magerbetrieb gewünscht, der eine Abgasrückführung erfordert. Da sich das gesamte Abgasrückführungssystem 32 noch auf niedrigen Temperaturen befindet, könnte im zurückgeführten Abgasstrom Kondensat enthalten sein. Dieses könnte den Verdichter 16 des Abgasturboladers beschädigen. Um dies zu vermeiden, sind das erste Regelventil 40 und das erste Sperrventil 52 geöffnet, während das zweite Sperrventil 56 geschlossen ist. Eine Ansteuerung der Hilfsdrosselklappe 18 ist in diesem Zustand nicht erforderlich. Die beiden Absperrventile 28, 30 sind geschlossen, so dass durch das geöffnete Regelventil 40 der Leckagestrom an Abgas durch die Absperrventile 28, 30 abgesaugt werden kann. Gleichzeitig wird das zweite Regelventil 48 so angesteuert, dass über den zweiten Absaugstrang 48 die benötigte Restmenge an zurückzuführendem Abgas abgezweigt wird.

Obwohl hier nicht im Detail dargestellt, ist erkennbar, dass eine Motorsteuerung die verschiedenen Ventile aufgrund von allgemeinen Signalen über den Betriebszustand und außerdem aufgrund von Signalen von den Drucksensoren 19, 38, dem Temperatursensor 46 und dem Abgasmassenmesser 35 ansteuert.

Das beschriebene Abgasrückführungssystem ermöglicht es, für jeden gewünschten Betriebszustand zum einen eine ausreichende. Menge an zurückzuführendem Abgas bereitzustellen und zum anderen zu gewährleisten, dass trotz einer möglicherweise unvermeidbaren Leckage im Bereich der Absperrventile 28, 30 kein Abgas den NOₓ-Speicherkatalysator 24 umgehen kann, wenn dies nicht zugelassen werden soll. Weiterhin ermöglicht es das Abgasrückführungssystem 32 aufgrund seiner Verzweigung in zwei Rückführstränge 50, 54, das zurückzuführende Abgas in Abhängigkeit vom Betriebszustand stromaufwärts des Verdichters 16 oder unmittelbar vor der Verbrennungskraftmaschine 10 stromabwärts der Drosselklappe 12 zurückzuführen. Die dabei oben beschriebenen Betriebszustände sind nur beispielhaft; es sind grundsätzlich auch weitere Betriebszustände denkbar.

Das beschriebene System kann grundsätzlich auch in vereinfachten Varianten betrieben werden. Durch Verzicht auf verschiedene. Komponenten fallen u.U. Teilfunktionen weg; die Grundfunktionalität des Systems bleibt aber erhalten.

Ein vereinfachtes, nicht von der Erfindung umfasstes System besteht darin, auf den ersten Rückführstrang 50 zu verzichten. Es muß dann nur mittels der Motorsteuerung dafür gesorgt werden, dass die Abgasrückführung im Warmlauf soweit entfällt bzw. verringert ist, dass eine Beschädigung des Verdichters durch Kondensat verhindert ist. In diesem Fall kann auch auf eines der Ventile 40, 56 verzichtet werden, vorzugsweise auf das Ventil 56. Insbesondere verbleiben dann nur die Ventile 40, 48.

Ein anderes, vereinfachtes System besteht darin, auf den Abgaskühler-Bypass 45 zu verzichten.

Anstelle der Regelventile 40 und 48 können einfachere Steuerventile verwendet werden oder sogar lediglich Sperrelemente.

Es ist auch möglich, auf die Sensoren 35 und 46 zu verzichten und die dadurch wegfallenden Signale durch eine Modellierung zu ersetzen.

Anstelle der Hilfsdrosselklappe könnte auch eine Abgasklappe verwendet werden, die das nötige Spülgefälle erzeugt. Dann müsste der Sensor 38 nach dem Speicherkatalysator angeordnet werden, und der Druck im ersten Absaugstrang würde durch eine Modellierung bereitgestellt.

Anstelle des Abgasturboladers kann als Aufladungssystem auch ein Kompressor verwendet werden.

## Patentansprüche

1. Abgasrückführungssystem (32) für eine Verbrennungskraftmaschine (10), mit
einem Emissionskontrollsystem (24) im Abgasstrang der Verbrennungskraftmaschine (10),
einem Emissionskontrollystem-Bypass (26),
einer Abgasrückführungsleitung (34), die einen ersten Absaugstrang (36) aufweist, der vom Bypass (26) abzweigt,
**dadurch gekennzeichnet, dass** die Abgasrückführungsleitung (34) einen zweiten Absaugstrang (42) aufweist, der vom Abgasstrang stromaufwärts des Emissionskontrollsystems (24) abzweigt, und dass sich die Abgasrückführungsleitung (34) verzweigt in einen Rückführstrang (54), der stromaufwärts eines Aufladungssystems (16, 20) in den Ansaugtrakt der Verbrennungskraftmaschine (10) mündet, und einen weiteren Rückführstrang (50), der stromabwärts des Aufladungssystems in den Ansaugtrakt der Verbrennungskraftmaschine (10) mündet, insbesondere stromabwärts einer Drosselklappe (12).

2. Abgasrückführungssystem nach Anspruch 1, **dadurch gekennzeichnet, dass** im zweiten Absaugstrang (42) ein Abgaskühler (44) angeordnet ist.

3. Abgasrückführungssystem nach Anspruch 2, **dadurch gekennzeichnet, dass** im zweiten Absaugstrang (42) ein Abgaskühler-Bypass (45) angeordnet ist.

4. Abgasrückführungssystem nach Anspruch 3, **dadurch gekennzeichnet, dass** dem Abgaskühler-Bypass (45) ein Steuerventil (47) zugeordnet ist.

5. Abgasrückführungssystem nach einem der vorhergehenden Ansprüche, **dadurch gekennzeichnet, dass** in wenigstens einem der Absaugstränge (36, 42) ein Ventil (40, 48) angeordnet ist.

6. Abgasrückführungssystem nach Anspruch 5, **dadurch gekennzeichnet, dass** das Ventil ein Regelventil (40, 48) ist.

7. Abgasrückführungssystem nach einem der vorhergehenden Ansprüche, **dadurch gekennzeichnet, dass** dem Emissionskontrollsystem-Bypass (26) zwei Absperrventile (28, 30) zugeordnet sind und dass der erste Absaugstrang (36) zwischen den beiden Ventilen abzweigt.

8. Abgasrückführungssystem nach einem der vorhergehenden Ansprüche, **dadurch gekennzeichnet, dass** in wenigstens einem der Rückführstränge (50, 54) ein Sperrventil (52, 56) angeordnet ist.

9. Abgasrückführungssystem nach einem der vorhergehenden Ansprüche, **dadurch gekennzeichnet, dass** stromaufwärts der Stelle, an welcher der zweite Rückführstrang (54) stromaufwärts des Aufladungssystems in den Ansaugtrakt mündet, eine Hilfsdrosselklappe (18) angeordnet ist.

10. Abgasrückführungssystem nach einem der vorhergehenden Ansprüche, **dadurch gekennzeichnet, dass** das Emissionskontrollsystem ein Speicherkatalysator, ein Partikelfilter oder ein SCR-Katalysator ist.

11. Abgasrückführungssystem nach einem der vorhergehenden Ansprüche, **dadurch gekennzeichnet, dass** das Aufladungssystem einen Abgasturbolader mit Verdichter (16) im Abgasstrang und Turbine (20) enthält.

12. Abgasrückführungssystem nach einem der Ansprüche 1 bis 10, **dadurch gekennzeichnet, dass** das Aufladungssystem einen Kompressor enthält.

13. Verbrennungskraftmaschine mit Aufladungssystem (16, 20) und einem Abgasrückführungssystem (32) nach einem der vorhergehenden Ansprüche.

## Claims

1. An exhaust recycling system (32) for an internal combustion engine (10) comprising:
an emission monitoring system (24) in the exhaust branch of the engine (10),
an emission monitoring system bypass (26),
an exhaust recycling pipe (34) comprising a first extraction branch (36) leading from the bypass (26),
**characterised in that** the exhaust recycling pipe (34) has a second branch (42) which extends from the branch upstream of the emission monitoring system (24), and the exhaust recycling line (34) divides into a branch (54) opening into the engine induction manifold upstream of a supercharging system (16, 20) and into another branch (50) opening into the internal combustion engine (10) intake manifold downstream of the supercharging system, especially downstream of a throttle valve (12).

2. An exhaust recycling system according to claim 1, **characterised in that** an exhaust radiator (44) is disposed in the second branch (42).

3. An exhaust recycling system according to claim 2, **characterised in that** an exhaust radiator bypass (45) is disposed in the second exhaust branch (42).

4. An exhaust recycling system according to claim 3, **characterised in that** the exhaust radiator bypass (45) is associated with a control valve (47).

5. An exhaust recycling system according to any of the preceding claims, **characterised in that** a valve (40, 48) is disposed in at least one of the exhaust branches (36, 42).

6. An exhaust recycling system according to claim 5, **characterised in that** the valve is an adjusting valve (40, 48).

7. An exhaust recycling system according to any of the preceding claims, **characterised in that** two shut-off valves (28, 30) are associated with the emission monitoring system bypass (26) and the first exhaust branch (36) extends between the two valves.

8. An exhaust recycling system according to any of the preceding claims, **characterised in that** a shut-off valve (52, 56) is disposed in at least one of the recycling branches (50, 54).

9. An exhaust recycling system according to any of the preceding claims, **characterised in that** an auxiliary throttle valve (18) is disposed upstream of the place where the second exhaust branch (54) opens into the intake manifold upstream of the supercharging system.

10. An exhaust recycling system according to any of the preceding claims, **characterised in that** the emission system is a storage catalytic converter or a particle filter or an SCR catalytic converter.

11. An exhaust recycling system according to any of the preceding claims, **characterised in that** the supercharging system comprises a supercharger and compressor (16) in the exhaust branch and also contains a turbine (20).

12. An exhaust recycling system according to any of claims 1 to 10, **characterised in that** the supercharging system contains a compressor.

13. An internal combustion engine comprising a supercharging system (16, 20) and an exhaust recycling system (32) according to any of the preceding claims.

## Revendications

1. Système de recyclage des gaz d'échappement (32) d'un moteur à combustion interne (10), comprenant :
- un système de contrôle d'émission (24) installé dans la conduite des gaz d'échappement du moteur à combustion interne (10),
- une dérivation (26) du système de contrôle d'émission,
- une conduite de recyclage des gaz d'échappement (34) comportant une première conduite d'aspiration (36) issue de la dérivation (26),
système **caractérisé en ce que**
la conduite de recyclage des gaz d'échappement (34) comporte une seconde conduite d'aspiration (42) issue de la conduite des gaz d'échappement en amont du système de contrôle d'émission (24), et
la conduite de recyclage des gaz d'échappement (34) se divise en une conduite de retour (54) débouchant dans la conduite d'admission du moteur à combustion interne (10) en amont d'un système de suralimentation (16, 20) et en une autre conduite de recyclage (50) débouchant dans la conduite d'admission du moteur à combustion interne (10) en aval du système de suralimentation, notamment en aval d'un volet d'étranglement (12).

2. Système de recyclage des gaz d'échappement selon la revendication 1,
**caractérisé par**
un radiateur de gaz d'échappement (44) installé dans la seconde conduite d'admission (42).

3. Système de recyclage des gaz d'échappement selon la revendication 2,
**caractérisé par**
une dérivation (45) de radiateur de gaz d'échappement dans la seconde conduite d'admission (42).

4. Système de recyclage des gaz d'échappement selon la revendication 3,
**caractérisé par**
une vanne de commande (47) associée à la dérivation (45) du radiateur des gaz d'échappement.

5. Système de recyclage des gaz d'échappement selon l'une des revendications précédentes,
**caractérisé par**
une vanne (40, 48) installée dans au moins l'une des conduites d'admission (36, 42).

6. Système de recyclage des gaz d'échappement selon la revendication 5,
**caractérisé en ce que**
la vanne est une vanne de régulation (40, 48).

7. Système de recyclage des gaz d'échappement selon l'une des revendications précédentes,
**caractérisé en ce que**
deux vannes d'arrêt (28, 30) sont associées à la dérivation (26) du système de contrôle d'émission, et
la première conduite d'aspiration (36) débouche entre les deux soupapes.

8. Système de recyclage des gaz d'échappement selon l'une des revendications précédentes,
**caractérisé par**
une vanne d'arrêt (52, 56) installée dans au moins l'une des conduites de recyclage (50, 54).

9. Système de recyclage des gaz d'échappement selon l'une des revendications précédentes,
**caractérisé par**
un volet d'étranglement auxiliaire (18) en amont du point où la seconde conduite de recyclage (54) débouche dans la conduite d'admission en amont du système de suralimentation.

10. Système de recyclage des gaz d'échappement selon l'une des revendications précédentes,
**caractérisé en ce que**
le système de contrôle d'émission est un catalyseur accumulateur, un filtre à particules ou un catalyseur SCR.

11. Système de recyclage des gaz d'échappement selon l'une des revendications précédentes,
**caractérisé en ce que**
le système de suralimentation comporte un turbocompresseur de gaz d'échappement avec un compresseur (20) dans la conduite des gaz d'échappement et une turbine (16).

12. Système de recyclage des gaz d'échappement selon l'une des revendications 1 à 10,
**caractérisé en ce que**
le système de suralimentation comporte un compresseur.

13. Moteur à combustion interne équipé d'un système de suralimentation (16, 20) et d'un système de recyclage des gaz d'échappement (32), selon l'une des revendications précédentes.
